# FASCICULE DE BREVET EUROPEEN

(11) **EP 2 473 822 B1**
(45) Date de publication et mention de la délivrance du brevet: **27.09.2017**
(21) Numéro de dépôt: 10762996.6
(22) Date de dépôt: 19.08.2010
(51) Int. Cl.: G01D 5/353, G01L 1/24, G01M 11/08, G01M 5/00

(54) **DISPOSITIF ET PROCÉDÉ DE MESURE À FIBRE OPTIQUE**
FASEROPTISCHE MESSVORRICHTUNG UND VERFAHREN
FIBER OPTIC MEASURING DEVICE AND METHOD

(30) Priorité: 31.08.2009 FR 0955939
(43) Date de publication de la demande: 11.07.2012
(73) Titulaire: Kloe S.A., 34000 Montpellier (FR)
(72) Inventeur: BRILLOUET, Nicolas, 34160 Castries (FR); COUDRAY, Paul, 34270 Saint Jean de Cuculles (FR)
(74) Mandataire: Thinat, Michel
(86) Numéro de dépôt international: PCT/FR2010/051741
(87) Numéro de publication internationale: WO 2011/023890

(56) Documents cités:
- WO-A1-02/090893
- WO-A1-02/095329
- FR-A1- 2 916 838
- US-B1- 6 204 920
- US-B1- 7 336 862

## Description

L'invention concerne un dispositif de mesure des contraintes environnementales d'une installation industrielle ou d'un ouvrage, à l'aide de réseaux de Bragg photoinscrits dans le coeur d'une fibre optique. Ces contraintes peuvent être liées à une variation de température, à une déformation de l'ouvrage, ou à une pression liée à un passage. Toute contrainte induit une modification de la période d'un ou plusieurs réseaux de Bragg qui se traduit par une modification du signal réfléchi par le ou les réseaux de Bragg.

On connaît déjà de nombreuses méthodes et dispositifs de mesure d'un flux de lumière réfléchi par les réseaux de Bragg dans une fibre optique. Ainsi, le document FR 2 674 639 propose de placer sur une même fibre un nombre important de capteurs reconnus les uns par rapport aux autres soit par la longueur d'onde λₛ sur laquelle ils agissent soit par leur distance par rapport à la centrale de mesure. Les documents WO02/090893, US7336862 et WO02/095329 décrivent des dispositifs de mesure selon l'état de la technique. Néanmoins, le nombre de capteurs permis par l'état actuel de la technique reste limité car les mesures sur le flux réfléchi posent des problèmes de synchronisation.

Pour remédier aux problèmes posés par l'état antérieur de la technique, l'invention a pour objet un dispositif de mesure comprenant une fibre optique qui contient une succession de réseaux de Bragg répartis entre une première extrémité et une deuxième extrémité. De façon remarquable, le procédé comprend une source de lumière agencée pour émettre un flux de lumière à plusieurs longueurs d'onde dans la première extrémité de la fibre, et un instrument connecté à la deuxième extrémité de la fibre pour mesurer une puissance de lumière transmise à chaque longueur d'onde émise.

Avantageusement, le dispositif de mesure comprend au moins une deuxième fibre optique qui contient une succession de réseaux de Bragg répartis entre une première extrémité et une deuxième extrémité reliée à l'instrument de mesure et un commutateur disposé entre la source de lumière et la première extrémité de chaque fibre optique de façon à émettre le flux de lumière dans chacune des fibres optiques.

De préférence, plusieurs longueurs d'onde dans une gamme spectrale de 200 nm, sont attribuées chacune à un réseau de Bragg différent de sorte qu'un espacement entre deux longueurs d'onde compris entre 1,5 et 2 nm, permette de mettre une centaine de réseaux de Bragg par fibre. Un espacement plus grand diminue simplement le nombre de réseaux par fibre.

Particulièrement, au moins une fibre optique est solidarisée à un ouvrage pour mesurer des contraintes mécaniques subies par l'ouvrage.

Plus particulièrement, une densité de réseaux de Bragg le long de la fibre optique est proportionnelle à une précision recherchée sur une localisation de contrainte.

Particulièrement aussi, au moins une fibre optique comprend une gaine en matériau appartenant à la famille des matériaux à bonne tenue en basse température comprenant les polyimides de façon à mesurer des températures dans le domaine cryogénique.

Particulièrement encore, au moins une fibre optique comprend une gaine en matériau appartenant à la famille des matériaux à bonne tenue en haute température comprenant les polyimides et les métaux de façon à mesurer des températures dans le domaine des hautes températures.

Avantageusement, les réseaux de Bragg sont photoinscrits dans au moins une fibre optique.

L'invention a aussi pour objet un procédé de mesure par fibre optique contenant des réseaux de Bragg à différentes longueurs d'onde de diffraction. Le procédé est remarquable en ce qu'il consiste à mesurer une puissance de lumière transmise par la fibre optique dans un spectre comprenant lesdites longueurs d'onde.

L'invention sera mieux comprise à la lecture de la description qui suit et à l'examen des figures qui l'accompagnent. Ces figures ne sont données qu'à titre illustratif et nullement limitatif de l'invention. Elles montrent :
- figure 1 : un dispositif de mesure par réflexion dans une fibre optique ;
- figure 2 : un dispositif de mesure par transmission dans une fibre optique.

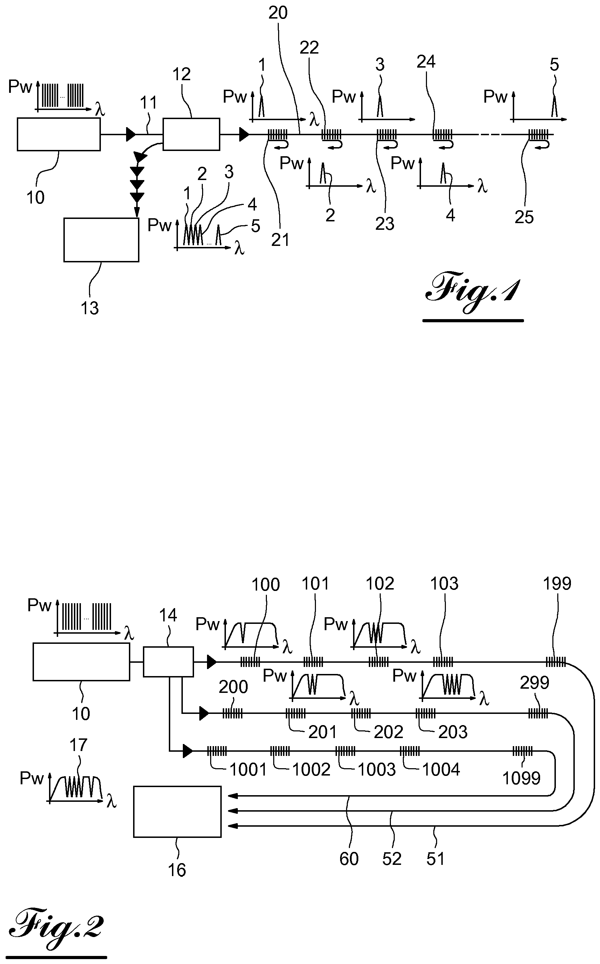

En référence à la figure 1, un signal optique est émis par une source laser 10 accordable ou à large bande spectrale. Ce signal optique est injecté dans une fibre optique 20, dans laquelle un ou plusieurs réseaux de Bragg 21, 22, 23, 24, 25 ont été photoinscrits. Les réseaux de Bragg peuvent être photoinscrits dans la fibre optique de différentes manières, telles que, à titre d'exemple non limitatif, celle décrite dans le brevet d'invention FR 2 830 626. On rappelle qu'un réseau de Bragg est une structure périodique fine constituée d'une succession de zones d'indices de réfraction forts et faibles. Chaque réseau de Bragg 21, 22, 23, 24, 25, dispose de sa propre période dite période de Bragg. A chaque période correspond une longueur d'onde de diffraction et une largeur de bande de diffraction. A la longueur d'onde de diffraction, le signal optique traversant le réseau de Bragg est réfléchi, tandis que toutes les autres longueurs d'ondes sont transmises à travers ce réseau. Une modification des conditions environnementales de la fibre optique 20 qui résulte par exemple d'une variation de température, d'une variation de pression, d'une déformation de la fibre, par extension, par cisaillement ou d'autres manières, induit une modification de la longueur d'onde de diffraction du réseau de Bragg. Cette modification induit un déplacement du pic de diffraction dans la bande spectrale. Classiquement, comme c'est le cas représenté sur la figure 1, les systèmes de mesure utilisent le signal réfléchi par le réseau de Bragg.

La source laser ajustable 10 est dimensionnée pour balayer un spectre de lumière dont les longueurs d'ondes varient par exemple de 1450 nm à 1650 nm. Un rayon laser 11 émis par la source laser 10 est alors envoyé dans la fibre 20 en passant par un coupleur 12. Lorsque la longueur d'onde λ₁ de la lumière transmise dans la fibre 20 correspond à la longueur d'onde de réflexion du réseau de Bragg 21, une bande spectrale 1 de longueur d'onde λ₁ et de puissance Pw(λ₁) réfléchie, repasse dans le coupleur 12 où elle est déviée vers un dispositif de mesure 13. De façon à ce que la lumière réfléchie ne soit pas renvoyée vers la source laser 10 mais vers le dispositif de mesure 13, le coupleur 12 est par exemple réalisé au moyen d'un circulateur. On rappelle qu'un circulateur est un dispositif à nombre fini d'entrées-sorties tel qu'un signal entrant par une entrée, ressort par la sortie suivante. Lorsque la longueur d'onde λ₂, λ₃, λ₄, respectivement λ₅ de la lumière transmise dans la fibre 20 correspond à la longueur d'onde de réflexion du réseau de Bragg 22, 23, 24, respectivement 25, une bande spectrale 2, 3, 4, respectivement 5 de longueur d'onde λ₂, λ₃, λ₄, respectivement λ₅ et de puissance Pw(λ₂), Pw(λ₃), Pw(λ₄), Pw(λ₅) réfléchie, repasse dans le coupleur 12 où elle est déviée vers le dispositif 13 de mesure de puissance.

En réflexion, la quantité de réseaux de Bragg est nécessairement limitée car une quantité élevée de réseaux de Bragg espacés chacun d'un faible différentiel de longueur d'onde, pose un problème considérable de synchronisation entre les équipements d'émission du signal optique représentés par le laser accordable 10 et les équipements de réception représentés par l'équipement de mesure 13. En effet, en réflexion, le signal optique traverse deux fois tous les réseaux de Bragg. Toute erreur de synchronisation peut induire une erreur d'interprétation du spectre mesuré, et donc des erreurs de mesure. En réflexion, un post-traitement est indispensable.

On précise que, pour fonctionner en réflexion, la nécessité d'utiliser un circulateur qui est un composant dont la plage de fonctionnement en longueur d'onde, en d'autres termes la bande passante, est relativement limitée, de l'ordre de 50nm typique à un maximum de 100nm, limite la plage de longueurs d'onde exploitable pour ce type de mesure et a fortiori l'intérêt de travailler avec des sources accordables couvrant une plage d'environ 200nm. Le fonctionnement en transmission que nous expliquons à présent, permet d'utiliser le plein potentiel des 200nm de la source laser accordable puisque dans ce cas aucun circulateur n'est nécessaire.

Le dispositif conforme à l'invention, dont un mode de mise en oeuvre possible est illustré par la figure 2, utilise le signal transmis par une fibre optique 51, 52, 60 dans laquelle le nombre de réseaux de Bragg 100, 101, 102, 103, ..., 199 peut aisément atteindre une centaine de réseaux de Bragg par fibre optique. Dans un dispositif conforme à l'invention, chaque réseau de Bragg a sa propre période.

A chaque période correspond une longueur d'onde pour laquelle la lumière est diffractée par le réseau de Bragg lorsque le tronçon de fibre qui héberge le réseau de Bragg, est dans un état de référence. Lorsque le tronçon de fibre se dilate, sous l'effet d'une contrainte en traction, d'une augmentation de température ou de tout autre phénomène physique provoquant une dilatation du tronçon, la valeur de la longueur d'onde augmente par rapport à celle de l'état initial. Réciproquement, lorsque le tronçon de fibre se rétracte, sous l'effet d'une contrainte en compression, d'une diminution de température ou de tout autre phénomène physique provoquant une rétreinte du tronçon, la valeur de la longueur d'onde diminue par rapport à celle de l'état initial.

On fait alors générer à la source laser 10 un spectre discret d'impulsions dans un intervalle d'encadrement de la longueur d'onde associée à l'état de référence. Un écart de 10 picomètres en longueur d'onde entre deux impulsions permet par exemple d'obtenir une précision de 1°K sur une mesure de température. Corrélativement, un écart de 1 picomètre en longueur d'onde entre deux impulsions permet d'obtenir une précision de 0,1°K sur la mesure de température. En transmission, il suffit alors de compter le nombre d'impulsions qui sépare l'impulsion non transmise de l'impulsion dont la longueur d'onde est associée à l'état de référence, pour déduire la variation d'état, notamment la variation de température, par rapport à l'état de référence, notamment par rapport à la température de référence.

L'espacement en longueur d'onde entre chaque réseau de Bragg est faible, de l'ordre de quelques nanomètres. Un instrument 16 d'interrogation de ce type de fibres optiques, est disposé à une extrémité opposée de la fibre par rapport à celle qui reçoit le rayon laser en provenance de la source 10.

Le fait d'interroger tous les réseaux de Bragg inscrits dans la fibre optique en transmission plutôt qu'en réflexion permet de relaxer la contrainte de synchronisation et, de ce fait, d'avoir une mesure plus précise, en temps réel, car sans nécessiter de post-traitement pour interpréter des spectres mesurés par l'instrument 16. Le dispositif de la figure 2 nécessite de déployer une fibre plus longue pour acheminer le signal jusqu'à l'instrument 16, le plus souvent installé sur le même châssis que la source laser 10. Les réseaux de Bragg 100, 101, 102, 103,..., 199 peuvent être répartis sur la première moitié de la fibre optique 51 correspondant au trajet aller, de sorte que le trajet retour de la fibre 51 soit dépourvu de réseau de Bragg. Selon un mode de réalisation alternatif, non représenté, les réseaux de Bragg peuvent être uniformément répartis sur le trajet aller et sur le trajet retour de la fibre 51.

Lorsqu'un spectre de puissance Pw de gamme spectrale 200 nm, franchit le réseau de Bragg 100, la partie de puissance Pw réfléchie génère un premier creux dans la puissance transmise qui correspond à la longueur d'onde de diffraction du réseau de Bragg 100. Ensuite, lorsque le spectre de puissance Pw restante, franchit successivement les réseaux de Bragg 101, 102, 103, ..., 199, la partie de puissance Pw réfléchie supplémentaire génère un autre creux dans la puissance transmise qui correspond à la longueur d'onde de diffraction de chaque réseau de Bragg 101, 102, 103, ..., 199. Une longueur d'onde distincte peut être attribuée à chacun des réseaux de Bragg en séparant deux longueurs d'onde successives comprises entre 1,5 et 2 nm.

Finalement le spectre 17 de puissance Pw restante qui arrive à l'instrument de mesure 16, présente un nombre de creux égal au nombre de réseaux de Bragg, chacun correspondant à un réseau de Bragg spécifique.

Le dispositif de la figure 2 permet de faire des mesures de températures et de variations de températures le long de la fibre optique 51 en chaque point où un réseau de Bragg a été inscrit. Des mesures de variations de températures dans le domaine cryogénique sont notamment réalisables à des températures de -100°C avec une fibre optique à gainage polyimide ou à -180°C avec des fibres optiques de type "cryofiber^{™}" produites par la Société IXFiber. Une baisse de température induit une contraction de la fibre, donc une contraction de la période de chaque réseau de Bragg soumis à la baisse de température. A basse température, on observe alors un déplacement vers la gauche des creux dans le spectre 17 par rapport au spectre observable à température ambiante.

En synchronisant le balayage du spectre par la source laser 10 sur une horloge commune avec l'instrument de mesure 16, la longueur d'onde correspondant à un creux est déterminable en fonction de la longueur de la fibre et de la vitesse de la lumière dans la fibre.

Dans une version améliorée, le dispositif comprend un réseau de Bragg, par exemple le réseau 100, situé dans une partie de la fibre dont la température est précisément connue. La longueur d'onde λᵣ alors précisément connue du réseau de Bragg, sert de référence pour contrôler la validité de la mesure et déterminer ainsi les températures équivalentes aux autres longueurs d'onde avec précision. En prenant l'instant de réception du creux de longueur d'onde λᵣ comme origine des temps, la durée qui sépare la réception d'un creux suivant dans l'instrument 16 est directement fonction de la durée qui sépare une émission de longueur d'onde suivante de la longueur d'onde de référence λᵣ.

Le dispositif de la figure 2 permet également de faire des mesures de températures et de variations de températures à hautes températures supérieures à 350°C avec une fibre optique à gainage en polyimide, ou à des températures supérieures à 500°C avec des fibres spéciales à gainage métallique. Une augmentation de température induit une dilatation de la fibre optique, donc une augmentation de la période de chaque réseau de Bragg dans une région de la fibre soumise à l'élévation de températures.

Un procédé de mesure par transmission qui utilise le dispositif représenté en figure 2, permet également de mesurer des déformations d'ouvrage par extension de la fibre optique, cisaillement, torsion, pression ou même rupture de la fibre optique lorsque la fibre optique est solidarisée à l'ouvrage. Chacune de ces contraintes mécaniques induisant une modification de la longueur et par conséquent de la période d'un ou de plusieurs réseaux de Bragg, la position du réseau de Bragg contraint permet de localiser la contrainte mécanique subie par l'ouvrage. Plus la densité de réseaux de Bragg le long de la fibre est élevée, meilleure est la précision de la localisation de la contrainte.

Le procédé de mesure en transmission permet de surveiller plusieurs fibres optiques installées le long d'un ouvrage. L'utilisation d'un commutateur optique 14 permet d'interroger successivement chacune de plusieurs fibres optiques 51, 52, ..., 60 en en connectant une extrémité à un système comprenant la source laser 10 et l'autre extrémité à l'instrument de mesure 16. On peut utiliser des commutateurs optiques 14 à deux, quatre et huit voies. On peut ainsi connecter à une deuxième voie la fibre optique 52 sur laquelle sont répartis jusqu'à cent réseaux de Bragg 200, 201, 202, 203, ..., 299. De même, sur la dernière voie, on peut connecter une fibre 60 comportant un grand nombre de réseaux de Bragg 1001, 1002, 1003, 1004, ... , 1099.

## Revendications

1. Dispositif de mesure comprenant une fibre optique (51) qui contient une succession de réseaux de Bragg (100, 101, 102, 103) répartis entre une première extrémité et une deuxième extrémité, **caractérisé en ce qu'**il comprend :
- une source de lumière (10) agencée pour émettre dans ladite première extrémité de la fibre (51), un spectre discret d'impulsions dont les longueurs d'ondes varient dans une gamme spectrale de 200 nm, par balayage du spectre, chaque longueur d'onde étant attribuée à un réseau de Bragg différent : et
- un instrument (16) connecté à ladite deuxième extrémité de la fibre pour mesurer une puissance de lumière transmise à chaque longueur d'onde émise.

2. Dispositif de mesure selon la revendication 1, **caractérisé en ce qu'**il comprend :
- au moins une deuxième fibre optique (52, 60) qui contient une succession de réseaux de Bragg (200, 201, 202, 203) répartis entre une première extrémité et une deuxième extrémité reliée à l'instrument (16) de mesure;
- un commutateur (14) disposé entre la source de lumière (10) et la première extrémité de chaque fibre optique de façon à émettre ledit flux de lumière dans chacune des fibres optiques.

3. Dispositif de mesure selon l'une des revendications 1 ou 2, **caractérisé en ce qu'**un espacement entre deux longueurs d'onde compris entre 1,5 et 2 nm permet de contrôler jusqu'à cent réseaux de Bragg sur une même fibre optique.

4. Dispositif de mesure selon l'une des revendications précédentes, **caractérisé en ce qu'**au moins une fibre optique est solidarisée à un ouvrage pour mesurer des contraintes mécaniques subies par l'ouvrage.

5. Dispositif de mesure selon la revendication 4, **caractérisé en ce qu'**une densité de réseaux de Bragg le long de la fibre optique est proportionnelle à une précision recherchée sur une localisation de contrainte.

6. Dispositif de mesure selon l'une des revendications 1 à 3, **caractérisé en ce qu'**au moins une fibre optique comprend une gaine en matériau appartenant à la famille des matériaux à bonne tenue en basse température comprenant les polyimides de façon à mesurer des températures dans le domaine cryogénique.

7. Dispositif de mesure selon l'une des revendications 1 à 3, **caractérisé en ce qu'**au moins une fibre optique comprend une gaine en matériau appartenant à la famille des matériaux à bonne tenue en haute température comprenant les polyimides et les métaux de façon à mesurer des températures dans le domaine des hautes températures.

8. Dispositif de mesure selon l'une des revendications précédentes, **caractérisé en ce que** lesdits réseaux de Bragg sont photoinscrits dans au moins une fibre optique.

9. Procédé de mesure par fibre optique contenant des réseaux de Bragg à différentes longueurs d'onde de diffraction, attribuées chacune à un réseau de Bragg différent dans une gamme spectrale de 200 nm, lequel consiste à mesurer une puissance de lumière transmise par la fibre optique dans un spectre comprenant lesdites longueurs d'onde **caractérisé en ce qu'**une source de lumière (10) est agencée pour émettre dans une première extrémité de la fibre optique (51), un spectre discret d'impulsions dont les longueurs d'ondes varient dans la gamme spectrale de 200nm, par balayage du spectre, chaque longueur d'onde étant attribuée à un réseau de Bragg différent.

## Patentansprüche

1. Messvorrichtung, umfassend eine optische Faser (51), die eine Abfolge von Bragg-Spiegeln (100, 101, 102, 103) enthält, die zwischen einem ersten Ende und einem zweiten Ende verteilt sind, **dadurch gekennzeichnet, dass** sie umfasst:
- eine Lichtquelle (10), die ausgebildet ist, um in das erste Ende der Faser (51) einen Lichtstrom mit mehreren Wellenlängen in einem Spektralbereich von 200 nm zu senden, durch Spektralabtastung, wobei jede Wellenlänge einem anderen Bragg-Spiegel zugeordnet ist, und
- ein mit dem zweiten Ende der Faser verbundenes Instrument (16), um eine Lichtleistung zu messen, die jeder gesendeten Wellenlänge übertragen wird.

2. Messvorrichtung nach Anspruch 1, **dadurch gekennzeichnet, dass** sie umfasst:
- mindestens eine zweite optische Faser (52, 60), die eine Abfolge von Bragg-Spiegeln (200, 201, 202, 203) umfasst, die zwischen einem ersten Ende und einem zweiten Ende verteilt sind, das mit dem Messinstrument (16) verbunden ist,
- einen Umschalter (14), der zwischen der Lichtquelle (10) und dem ersten Ende jeder optischen Faser angeordnet ist, um den Lichtstrom in jede der optischen Fasern zu schicken.

3. Messvorrichtung nach einem der Ansprüche 1 oder 2, **dadurch gekennzeichnet, dass** eine Beabstandung zwischen zwei Wellenlängen von zwischen 1,5 und 2 nm inklusive erlaubt, bis zu einhundert Bragg-Spiegel auf einer selben optischen Faser zu steuern.

4. Messvorrichtung nach einem der vorangehenden Ansprüche, **dadurch gekennzeichnet, dass** mindestens eine optische Faser mit einem Teil fest verbunden ist, um mechanische Beanspruchungen zu messen, die auf das Teil wirken.

5. Messvorrichtung nach Anspruch 4, **dadurch gekennzeichnet, dass** eine Dichte von Bragg-Spiegeln entlang der optischen Faser proportional zu einer gesuchten Präzision auf einer Beanspruchungsstelle ist.

6. Messvorrichtung nach einem der Ansprüche 1 bis 3, **dadurch gekennzeichnet, dass** mindestens eine optische Faser einen Mantel aus Material umfasst, das zur Familie der Materialien mit guter Tieftemperaturverträglichkeit gehört, umfassend die Polyimide, um Temperaturen im Kryobereich zu messen.

7. Messvorrichtung nach einem der Ansprüche 1 bis 3, **dadurch gekennzeichnet, dass** mindestens eine optische Faser einen Mantel aus Material umfasst, das zur Familie der Materialien mit guter Hochtemperaturverträglichkeit gehört, umfassend die Polyimide und die Metalle, um Temperaturen im Hochtemperaturbereich zu messen.

8. Messvorrichtung nach einem der vorangehenden Ansprüche, **dadurch gekennzeichnet, dass** die Bragg-Spiegel in mindestens eine optische Faser lichteingeschrieben sind.

9. Messverfahren durch optische Faser, enthaltend Bragg-Spiegel mit verschiedenen Diffraktionswellenlängen, die jede einem anderen Bragg-Spiegel in einem Spektralbereich von 200 nm zugeordnet sind, welches darin besteht, eine von der optischen Faser in einem Spektrum, welchen die Wellenlängen umfasst, übertragene Lichtleistung zu messen, **dadurch gekennzeichnet, dass** eine Lichtquelle (10) ausgebildet ist, um in ein erstes Ende der optischen Faser (51) ein diskretes Impulsspektrum zu senden, deren Wellenlängen im Spektralbereich von 200 nm schwanken, durch Spektralabtastung, wobei jede Wellenlänge einem anderen Bragg-Spiegel zugeordnet ist.

## Claims

1. A measuring device comprising an optical fiber (51) that contains a series of Bragg arrays (100, 101, 102, 103) distributed between a first end and a second end, **characterized in that** it comprises:
- a light source (10) arranged to emit, in said first end of the fiber (51), a discrete spectrum of pulses, the wavelengths of which vary in a spectral range of 200 nm, by scanning the spectrum, each wavelength being assigned to a different Bragg array; and
- an instrument (16) connected to said second end of the fiber to measure a light power transmitted at each emitted wavelength.

2. The measuring device according to claim 1, **characterized in that** it comprises:
- at least one second optical fiber (52, 60) that contains a series of Bragg arrays (200, 201, 202, 203) distributed between a first end and a second end connected to the measuring instrument (16);
- a switch (14) positioned between the light source (10) and the first end of each optical fiber so as to emit said light flow in each of the optical fibers.

3. The measuring device according to one of claims 1 or 2, **characterized in that** a space between two wavelengths comprised between 1.5 and 2 nm makes it possible to control up to one hundred Bragg arrays on a same optical fiber.

4. The measuring device according to one of the preceding claims, **characterized in that** at least one optical fiber is secured to a structure to measure mechanical stresses experienced by the structure.

5. The measuring device according to claim 4, **characterized in that** a density of Bragg arrays along the optical fiber is proportional to a desired precision over a stress location.

6. The measuring device according to one of claims 1 to 3, **characterized in that** at least one optical fiber comprises a sheath made from a material belonging to the family of materials with good strength at low temperatures comprising polyimides so as to measure temperatures in the cryogenic domain.

7. The measuring device according to one of claims 1 to 3, **characterized in that** at least one optical fiber comprises a sheath made from a material belonging to the family of materials with good mechanical strength at high temperatures, comprising polyimides and metals so as to measure temperatures in the high temperature domain.

8. The measuring device according to one of the preceding claims, **characterized in that** said Bragg arrays are photo-inscribed in at least one optical fiber.

9. A fiber-optic measuring method containing Bragg arrays with different diffraction wavelengths, each assigned to a different Bragg array in a spectral range of 200 nm, which consists of measuring a light power transmitted by the optical fiber in a spectrum comprising said wavelengths, **characterized in that** a light source (10) is arranged to emit, in a first end of the optical fiber (51), a discrete spectrum of pulses whereof the wavelengths vary in the spectral range of 200 nm, by scanning the spectrum, each wavelength being assigned to a different Bragg array.
